# EUROPEAN PATENT SPECIFICATION

(11) **EP 1 037 755 B1**
(45) Date of publication and mention of the grant of the patent: **13.03.2002**
(21) Application number: 97953121.7
(22) Date of filing: 09.12.1997
(51) Int. Cl.: B60C 23/04

(54) **ANTENNA FOR RADIO TRANSPONDER**
SPULENANTENNEN FÜR ÜBERTRAGER MIT INTEGRIERTEM SCHALTKREIS
ANTENNE POUR REPONDEUR RADIO

(43) Date of publication of application: 27.09.2000
(73) Proprietor: THE GOODYEAR TIRE & RUBBER COMPANY, Akron, Ohio 44316-0001 (US)
(72) Inventor: POLLACK, Richard, Stephen, Boulder, CO 80302 (US)
(74) Representative: Leitz, Paul
(86) International application number: US9722571
(87) International publication number: WO9929525

(56) References cited:
- DE-A- 19 532 914
- FR-A- 2 731 833
- US-A- 3 665 388
- US-A- 4 319 220

## Description

### Background of the Invention

This invention relates to an annular apparatus, including an antenna for electronically transmitting tire or wheel identification or other data at radio frequency. The apparatus includes a radio-frequency transponder comprising an integrated circuit chip having data capacity at least sufficient to retain identification information for the tire or wheel. Other data, such as the inflation pressure of the tire or the temperature of the tire or wheel at the transponder location, can be transmitted by the transponder along with the identification data.

As is evidenced by the references described below, it is known in the art to employ an annular antenna to transmit, at radio frequencies, data from a transponder contained within the structure of a tire or tire and wheel assembly. In practice, however, it is very difficult to do this with an antenna incorporated into the tire during the course of its manufacture. Both radial ply and bias ply tires undergo a substantial diametric enlargement during the course of manufacture. Bias ply tires are expanded diametrically when inserted into a curing press, which typically has a bladder that forces the green tire into the toroidal shape of the mold enclosing it. Radial ply tires undergo diametric expansion during the tire building or shaping process and a further diametric expansion during the course of curing. Any electronic circuitry coupled to an annular antenna built into the tire must be able to have its electrical connections survive this diametric enlargement of the tire during its manufacture. Furthermore, the annular antenna must be able to survive the repeated deformations occurring during tire use.

Electrical connections between circuit elements and antenna systems cannot easily be made during the course of tire manufacture.

It has been proposed in the past to use conductive rubber as an antenna material in the sidewall or under the tread of a tire. The difficulty with providing such a conductive rubber in a tire annularly is that the length of the path of an annular antenna is long, particularly if located at the diameter of the tire sidewall or tread, and the resistivity of conductive rubber compounds, as a function of conductive carbon black quantity, becomes substantially constant at a level too high for transponder activation, particularly in medium truck tires.

Accordingly, it is desirable for an annular apparatus, including a transponder of tire identification or other data, such as pressure or temperature at the transponder location, to accommodate the diametric enlargement of the tire during the building and curing process. Also, the antenna must be able to survive the rigors of tire operation and there should be no danger of antenna malfunction due to breakage of wire or electrical connections, and the electrical resistance must be lower than the maximum amount allowable for adequate transponder function in the tire or wheel environment.

It is desirable to interrogate or read the data contained within or transmitted by the transponder at any position around the 360° circumference of the pneumatic tire.

Transponders typically require a tuning capacitor in parallel with an antenna coil to tune the circuit to the resonant frequency transmitted by the reader. Desirably, this should not be necessary, or at a minimum, should not require selection of the capacitance value for each tire being manufactured.

A desirable feature of a transponder apparatus in a tire is that it be able to transmit tire pressure data if a pressure sensor is used in conjunction therewith. Also, it is desirable that the transponder be able to transmit information related to the temperature of the tire at the transponder location.

The annular apparatus used as a transponder mechanism for transmitting data from a tire or wheel should be inexpensive both with respect to materials and labor needed to incorporate it into tire or wheel assembly.

Another problem encountered by prior art apparatus is the testing procedures that tires go through before retreading. In truck tires, which are retreaded two, three, or more times, it is necessary that the transponder and antenna system associated with it be able to survive the high-voltage inspection routinely utilized during retreading of such tires. In the use of such high-voltage testing, chains having the high voltage are dragged along the interior of the tire in an attempt to create a high voltage-arc through any nail holes or other perforations that might be present in the tire casing as a result of its use prior to retreading. This voltage, which typically is on the order of 40,000 volts pulsed, can easily arc to an antenna system providing 360° data readability, and damage the transponder.

A further desirable aspect of an antenna system designed to be used with a transponder in a pneumatic tire is limitation of the transmission range. To prevent interference with other signals or inability to detect data coming from tires positioned adjacent one another, the transmission should be limited to the "near field" created by the interrogating device, whether this is a portable reader, a "drive-over" reader, or a reader "on-board" a vehicle on which a tire or wheel is mounted.

The most accurate and effective way of providing pressure and temperature monitoring devices on tires is to include the device within the structure of a tire or a wheel assembly. Devices which are designed to be attached to the tire rim and wheel have been cumbersome and their accuracy is questionable. On the other hand, since a tire is subjected to high pressures and temperatures during the building thereof, many devices that theoretically would monitor the temperature and pressure of a tire cannot survive the tire building process.

Accordingly, the challenge in the art is to provide a device small enough that it does not alter the properties of the tire in use, and sturdy enough that it will not be destroyed in tire building and curing processes or during the running of the tire after it has been mounted on a vehicle.

It is an object of the invention to provide an apparatus which can be built into a tire, is small enough that it does not have a noticeable affect on the operation of the tire, and is sturdy enough to withstand the millions of deformations that a tire undergoes during its use on a vehicle.

Other objects of the invention will be apparent from the following description and claims.

### Description of the Prior Art

Tire safety indicator means have been provided in the prior art to indicate when the tread of a tire is worn to the point where the tread or the tire must be replaced. See for example De Cicco in U.S. Patent 3,770,040.

As the art has advanced, systems for monitoring vehicle tire pressure and the like have been proposed wherein a transmitter and a receiver are mounted on a vehicle body, and magnetically coupled inductor and enhancer circuits are carried on the vehicle wheel to provide monitoring a vehicle tire pressure, as described by Allen in U.S. Patent 4,588,978. Other devices to monitor tire pressure have been proposed by Galasko et al., in U.S. Patent 4,578,992, who teach a coil mounted in a tire which forms, with a capacitor, a passive oscillatory circuit. The circuit is energized by pulses supplied via a coil positioned outside the tire and secured to the vehicle, and the frequency in the passive oscillatory circuit is varied with tire pressure due to changes caused to the capacitance value of the capacitor. The frequency in the circuit is sensed by a coil positioned outside the tire and secured to the vehicle.

Milheiser, in U.S. Patent 4,730,188, teaches the use of a passive integrated transponder which is attached to or imbedded in an item to be identified, and is excited by an inductive coupling from an interrogator.

Fiorletta, in U.S. Patent 5,289,160, teaches a wireless tire pressure monitoring system which warns a driver of low pressure in one or more tires. Fiorletta teaches that a pressure transducer, transmitter and antenna are integrally housed and mounted to the tire stem of a tire. When the pressure transducer senses a tire pressure below a pre-selected pressure, the transmitter broadcasts a radio frequency signal that, upon detection by a receiver mounted on the vehicle, warns the driver. In a preferred embodiment, the transmitter is a device that is periodically interrogated by an RF signal from a transmitter on the vehicle.

In PCT Application WO90/12474, it is taught that electronic transponders can be embedded within or on vehicle tires and electromagnetically actuated by signals from an interrogator coil. The application indicates that the transponder responds to actuation by producing a shifted frequency modulated with synchronization pulses and identifying digital information, and can also be used to include information on the condition and environment of the tire.

Hettich et al., in U.S. Patent 5,140,851, teach a circuit arrangement for monitoring air volume in vehicle tires which provides correction for the temperature of the tire. The patent states that the temperature and pressure measurement value of the tire is measured by a rotating sensor on the wheel, which is monitored, and the data fed to a correction circuit which also receives a plurality of correction parameters. A corrected value for the temperature or for the air pressure in the tire is transmitted at output of the correction circuit as a function of the correction parameters.

PCT Application WO92/20539 provides an abnormal tire condition warning system which comprises a housing, a band for mounting the housing on the tire rim, a sensor for monitoring the condition within the tire, circuitry operatively connected to the sensor for generating radial signals indicative of the tire condition, a power supply operatively connected to the circuitry, a centrifugal switch and a receiver for receiving the radio signals.

Dunn et al., in U.S. Patent 4,911,217 describe a radio-frequency tire identification system having an integrated circuit chip transponder.

Pollack et al., in U.S. Patent 5,181,975, teach a tire having an integrated circuit transponder which comprises a coil antenna of small enclosed area, as compared to the area enclosed by the bead of the tire, which acts as a primary winding of a transformer. The coil is planar in shape, and when positioned between the innerliner and the carcass ply of the tire, may include a pressure sensor.

Brown et al., in U.S. Patent 5,218,861, teach a pneumatic tire having an integrated circuit transponder which has an antenna which is coupled by electric or magnetic fields to the bead of the tire.

U.S. Patent 4,319,220, which is considered as the closest prior art, discloses a tire having an antenna within the crown area consisting of a number of wires, each one being wound as a single continuous loop.

### Definitions

The following definitions are provided to facilitate the reading of the specification and the understanding of the invention.

"Transmitter" refers to a radio frequency emitter.

"Receiver" refers to a radio frequency receptor.

"Interrogator" refers to a transmitter-receiver decoder combination.

"Induction/Inductor" refers to the effect of varying magnetic field to cause induced voltage in a conductor.

"Lines of flux" refers to magnetic intensity and the direction of the magnetic intensity vector.

"Frequency" refers to periodic rate of change of A.C. voltage source.

"Transponder" refers to a receiver of RF energy capable of transmitting coded information to an interrogator (scanner).

"Equatorial plane (EP)" refers to the plane intersected at the tire centerline.

"Radially" refers to a radius line from a tire axis to a tire circumference, and lines parallel thereto.

### Summary of the Invention

An antenna for electronically transmitting pneumatic tire or wheel data comprises a continuous wire arranged in a series of loops adapted to be disposed circumferentially in the crown area of a tire. The wire is arranged such that the wire does not cross over itself and completes a circuit for a transponder circuit board adapted to transmit the data. In the illustrated embodiment the antenna has a length that is substantially the same as the circumference of the carcass of a tire in which it is used, and is expandable with the carcass when the carcass expands.

The antenna may be made from steel wire coiled into a spring or it may comprise multi-filament wire and preferably is encased in insulating rubber.

A portion of each loop of the antenna is in close proximity to a portion of an adjacent loop whereby induced magnetic lines of flux created by an electrical current in one loop induces electrical current in an adjacent loop.

In a further embodiment, a transponder circuit board associated with the antenna contains a coil which matches the impedance of the antenna with the impedance of the transponder.

A pneumatic tire of the invention comprises at least a pair of parallel annular beads, at least one carcass ply wrapped around said beads, a tread disposed over said carcass plies in a crown area of said tire, and sidewalls disposed between said tread and said beads, and a transponder antenna disposed in the crown area of said tire. The antenna comprises a continuous wire arranged in a series of loops disposed circumferentially in the crown area of the tire wherein the wire does not cross over itself and completes a circuit for a transponder circuit board associated with the antenna.

The antenna used in the tire is substantially as described above and may be 1 to 3 inches wide.

### Brief Description of Drawings

Fig. 1 illustrates a cross section of a RMT (radial medium truck) tire having the apparatus of the invention embedded in the crown of the tire.
Fig. 2 illustrates a top view of composite antenna of the invention.
Fig. 3 illustrates a perspective view a composite antenna of the invention.
Fig. 4 illustrates an embodiment where the signal is further optimized using an impedance matching coil between the antenna and the transponder.

### Detailed Description of the Invention

In the art relating to the gathering of information from an animate or dynamic objects, as it relates to tires, the trend has been toward implanting a device, which is capable of transmitting information and is responsive to an outside power source, in the tire to be identified. This is accomplished by including a coil (which is capable of carrying an induced electrical current) of some sort in the implanted device. An electrical current can be induced in the coil by a magnetic field produced by an interrogator as the lines of flux from the magnetic field cut across the coil. The current produced in the coil, in turn, produces a magnetic field which can be read by the interrogator. The current in the coil, and the signal read by the interrogator, can be altered by electrical devices used to provide tire data, such as temperature and pressure sensors, and these differences in the signal can be read and interpreted by the interrogator.

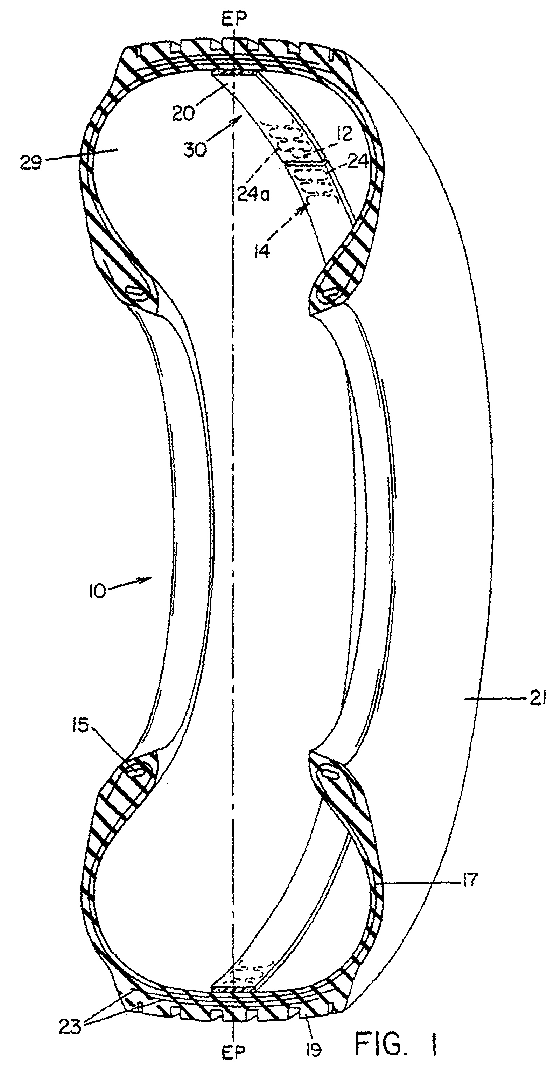

With reference now to Fig. 1, a tire 10 is illustrated which incorporates an antenna composite 30 which includes a transponder 12, or signal generator, which can be used to provide tire data such as the inflation pressure within the tire, the temperature of the tire, the tread depth, and the tire identification. As is conventional in the art, the tire is made using at least one pair of annular beads 15 over which is wrapped at least one carcass ply 17. Belts 23 are disposed over carcass ply 17 in a crown area of the tire, and tread 19 is disposed over belts 23. Sidewalls 21 are disposed between tread 19 and beads 15. In the illustrated embodiment, the tire also has an innerliner 29 which is disposed radially underneath carcass ply 17.

The tire illustrated is an RMT (radial medium truck tire), but those skilled in the art will recognize that the apparatus of the invention may have utility in passenger tires, or any tire for which data on the history or the condition of the tire is needed.

The most common tires, depending on the kind, have up to 4 pairs of beads, up to 12 carcass plies, and up to 12 belts.
In the illustrated embodiment, transponder 12 is disposed under the center of the tread, i.e. at the equatorial plane (EP) of the tire, and radially below carcass ply 17 and radially above innerliner 29. It is believed that this location in the tire provides the most accurate data, and makes the data of the tire more easily accessible whether the tire is mounted on a vehicle or stacked in the warehouse, since the data can be retrieved by bringing an interrogator near the tread at any portion of the tread around the 360° circumference of the tire.

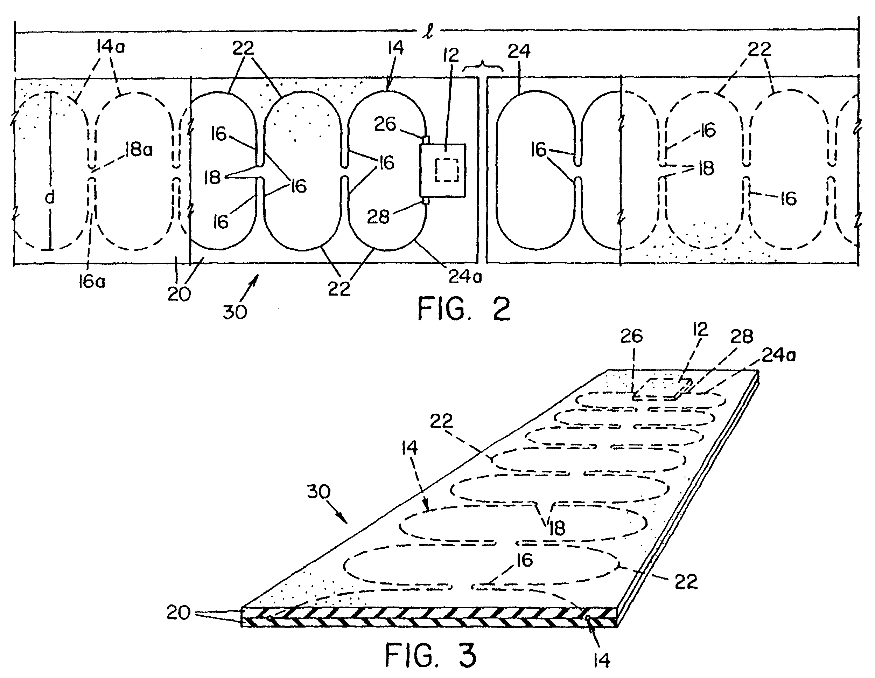

With reference now to Figs. 2 and 3, the ability to read data from the tire at any point around its circumference is made possible because antenna wire 14 of antenna composite 30, a conductor, is disposed over the circumference of the tire at its equatorial plane (EP).

Transponder 12 is similar to that illustrated in US-A-5,181,975, US-A- 5,218,861, WO99/29524, WO99/29523 and WO99/29522 assigned to The Goodyear Tire and Rubber Company. Transponder 12 provides identification data for the tire, and may be used to monitor tire pressure, the temperature of the tire, and the like.

Antenna composite 30 is a preassembled package that includes antenna wire 14 and transponder circuit board 12 encased in an insulating rubber 20.

The antenna composite 30 may be one to six inches (2,54 to 15,2 cm) wide, preferably one to three inches (2,54 to 7,6 cm) wide, and is made with sufficient length needed to fit around the circumference of the carcass of a tire for which it is made.

Those skilled in the art recognize that a carcass ply has one diameter when flat on a tire building drum, and different, larger diameters when it is expanded to shape the tire in the tire building process, and expanded again in the tire curing press. The antenna composite of the invention is expandable to change diameters with the carcass ply when the carcass ply is expanded.

Insulating rubber 20 may be any rubber composition having properties suitable for use in a tire and resistivity needed to protect the antenna and chip from stray electrical charges. Examples of such insulating rubbers and its physical requirements are discussed in the commonly assigned copending applications discussed above.

Wire 14 of composite antenna 30 is bent into loops 14a wherein a proximal wire portion 16 on both circumferential sides (as oriented in the tire) of each loop (except for end loop 24 and end loop with transponder 24a) is in close proximity to a corresponding proximal wire portion 16 in an adjacent loop. In end loops 24 and 24a, the proximal wire portion 16 is present on only one side of the loop.

The wire 14 may be filament wire, or cord or stranded wire. Wire similar to the wire used in carcass reinforcement can be used, which comprises six strands of high tensile steel (hts) wire woven around a wire core, or wire filaments wound into a spring can be used.

In the illustrated embodiment, the wire 14 has a diameter of 0.1 to 1mm, preferably 0.12 to 0.18mm. In the example, the wire has a diameter of 0.15mm.

Gap 18a between loop ends 18 separates one loop from an adjacent loop without cross over of wire 14, and may be similar in width to the gap 16a between proximal wire portions 16 of adjacent loops. In the illustrated embodiment loop ends 18 are located in the center region of antenna composite 30, but those skilled in the art will recognize that loop ends 18 may be located at other portions of the loop, such as near expansion loop end 22 in each loop.

As is known to those skilled in the art, the movement of electrons through a wire induces magnetic lines of flux (a magnetic field) surrounding the wire. As is also known to those skilled in the art, the movement of a wire through a magnetic field, or the movement of a magnetic field over a wire, induces the movement of electrons in a wire. When an interrogator approaches antenna composite 30, an electrical current is induced throughout the length of wire 14. In antenna composite 30, the close proximity of loops 14a permit induction of several loops 14a by the interrogator as it approaches the tire. The signals induced in the several loops are additive and boost the total signal of the antenna.

In the illustrated embodiment, loops 14a are oval, having their longest diameter d perpendicular to the length direction 1 of antenna composite 30.

During the construction of a tire, there are three expansion changes within the tire structure which together cause the tire to expand 128% to 133% from its size on the building drum. The wire construction used in the illustrated embodiment provides a design expansion of about 300%. The oval shape of loops 14a permit expansion of antenna composite through expansion of loops 14a at expansion loop end 22 in addition to separation of the loops at proximal wire portions 16.

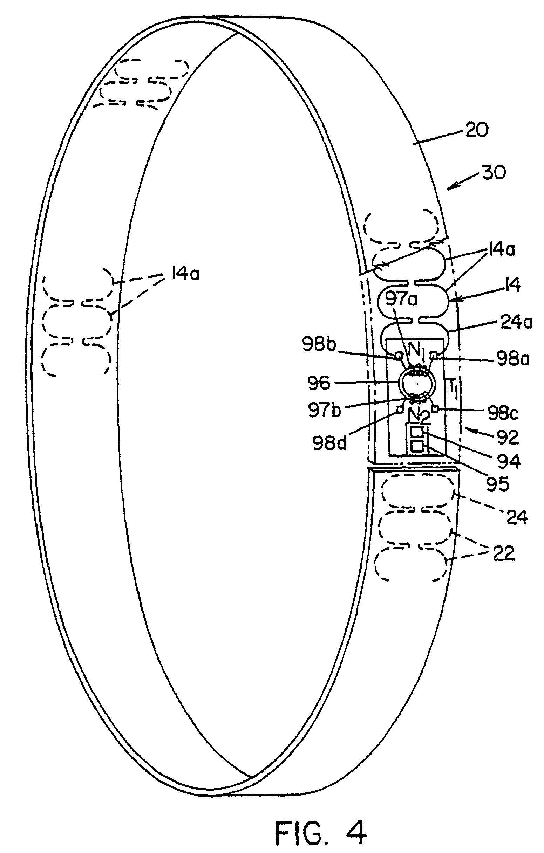

With reference to Fig. 4, it has been found that the response to the interrogator can be enhanced if the impedance of the antenna is closely matched to the impedance of the transponder, i.e. the impedance's can be matched so that the antenna uses only the power needed to activate the transponder. The impedance of the interrogator and the transponder are matched using a ferrite core 96 to step up or step down the voltage of the transponder 92 using turns of magnet wire 97a, 97b wrapped around ferrite core 96. Accordingly, terminals 98a and 98b connect the opposite ends of turns 97a to opposing ends of antenna wire 14, and terminals 98c and 98d connect the opposite ends of turns 97b to chip 94. In the embodiment illustrated, a pressure sensor 95 is located on the same circuit board as chip 94. located on the same circuit board as chip 94.

In the illustrated embodiment of Fig. 4, the transponder package was prepared by Phase IV Engineering, of Boulder Colorado, using a 0.06 inch (1,5 mm) thick ferrite core having an O.D. (outside diameter) of 0.23 inch (5,8mm) and an I.D. of 0.12 (3 mm) inch, cat. Number 5975000101, available from Fair-Rite Products Corp., One Commercial Row, Wallkill, N.Y. 12589.

Additional or special means may be provided to protect the chip of the transponder from electrical arcing caused by test equipment, for example, as described in the copending, commonly assigned applications discussed above.

## Claims

1. An antenna (30) for electronically transmitting pneumatic tire or wheel data, the antenna comprising a continuous wire (14) arranged in a series of loops (14a) adapted to be disposed circumferentially on a crown area of a tire (10), wherein the wire does not cross over itself and completes a circuit for a transponder circuit board (12) adapted to transmit said data.

2. The antenna (30) of claim 1 wherein the length thereof is substantially the same as the circumference of the carcass of the tire (10) in which it is used.

3. The antenna (30) of claim 1 wherein said wire (14) is steel wire coiled into a spring.

4. The antenna (30) of claim 1 wherein said wire (14) is multi-filament wire.

5. The antenna (30) of claim 1 which is encased in insulating rubber (20).

6. The antenna (30) of claim 5 wherein a strip of insulating rubber (20) containing said antenna is 1 to 6 inches (2,54 to 15,2 cm) wide.

7. The antenna (30) of claim 1 where said loops (14a) are oval in shape wherein the longer axis (d) of a loop is perpendicular to the axis (1) of the series of loops.

8. The antenna (30) of claim 1 wherein the total gauge of the wire is 0.005 inch to 0.04 inch (0,13 to 1 mm).

9. The antenna (30) of claim 1 wherein the transponder circuit board (12) contains a coil which matches the impedance of the antenna with the impedance of a transponder/signal.

10. A pneumatic tire (10) comprising at least a pair of parallel annular beads (15), at least one carcass ply (17) wrapped around said beads, a tread (19) disposed over said carcass plies in a crown area of said tire, and sidewalls (21) disposed between said tread and said beads, and a transponder antenna (30) disposed in the crown area of said tire, wherein said antenna comprises a continuous wire (14) arranged in a series of loops (14a) adapted to be disposed circumferentially in a crown area of a tire, wherein the wire does not cross over itself and completes a circuit for a transponder circuit board (12) adapted to transmit said data.

11. The tire (10) of claim 10 wherein said antenna (30) has a length substantially the same as the circumference of a carcass of a tire in which it is used.

12. The tire (10) of claim 10 wherein said wire (14) is steel wire coiled into a spring.

13. The tire (10) of claim 10 wherein said wire (14) is multi-filament wire.

14. The tire (10) of claim 10 wherein said wire (14) is encased in insulating rubber (14).

15. The tire (10) of claim 10 wherein a strip of insulating rubber (20) containing said antenna is 1 to 6 inches (2,54 to 15,2 cm) wide.

16. The tire (10) of claim 15 wherein said loops (14a) of said antenna are oval in shape and the longer axis (d) of a loop is perpendicular to the axis (1) of the series of loops.

17. The tire (10) of claim 10 wherein the total gauge of the antenna wire is 0.005 inch to 0.04 inch (0,13 to 1 mm).

## Patentansprüche

1. Antenne (30) zum elektronischen Übertragen von Luftreifen- oder Raddaten, wobei die Antenne einen kontinuierlichen Draht (14) umfaßt, der in einer Reihe von Schleifen (14a) angeordnet ist, die derart ausgebildet sind, daß sie in Umfangsrichtung an einem Kronenbereich eines Reifens (10) angeordnet sind, wobei sich der Draht selbst nicht überkreuzt und einen zum Übertragen der Daten ausgebildeten Schaltkreis für eine Transponderleiterplatte (12) vervollständigt.

2. Antenne (30) nach Anspruch 1, wobei ihre Länge im wesentlichen gleich ist wie der Umfang der Karkasse des Reifens (10), in dem sie verwendet wird.

3. Antenne (30) nach Anspruch 1, wobei der Draht (14) zu einer Feder gewickelter Stahldraht ist.

4. Antenne (30) nach Anspruch 1, wobei der Draht (14) Multifilamentdraht ist.

5. Antenne (30) nach Anspruch 1, die in einem isolierenden Gummi (20) eingebettet ist.

6. Antenne (30) nach Anspruch 5, wobei ein Streifen aus isolierendem Gummi (20), der die Antenne enthält, 1 bis 6 Zoll (2,54 bis 15,2 cm) breit ist.

7. Antenne (30) nach Anspruch 1, wobei die Schleifen (14a) eine ovale Form aufweisen, wobei die längere Achse (d) einer Schleife senkrecht zur Achse (I) der Reihe aus Schleifen steht.

8. Antenne (30) nach Anspruch 1, wobei die Gesamtstärke des Drahts 0,005 Zoll bis 0,04 Zoll (0,13 bis 1 mm) beträgt.

9. Antenne (30) nach Anspruch 1, wobei die Transponderleiterplatte (12) eine Spule enthält, die die Impedanz der Antenne an die Impedanz eines Transponders/Signals anpaßt.

10. Luftreifen (10) mit mindestens zwei parallelen, ringförmigen Wülsten (15), mindestens einer Karkasslage (17), die um die Wülste herumgewickelt ist, einem Laufstreifen (19), der über den Karkasslagen in einem Kronenbereich des Reifens angeordnet ist, und Seitenwänden (21), die zwischen dem Laufstreifen und den Wülsten angeordnet sind, und einer Transponderantenne (30), die im Kronenbereich des Reifens angeordnet ist, wobei die Antenne einen kontinuierlichen Draht (14) umfaßt, der in einer Reihe von Schleifen (14a) angeordnet ist, die derart ausgebildet sind, daß sie in Umfangsrichtung in einem Kronenbereich eines Reifens angeordnet sind, wobei der Draht sich selbst nicht überkreuzt und einen zum Übertragen der Daten ausgebildeten Schaltkreis für eine Transponderleiterplatte (12) vervollständigt.

11. Reifen (10) nach Anspruch 10, wobei die Antenne (30) eine Länge aufweist, die im wesentlichen gleich ist wie der Umfang einer Karkasse eines Reifens, in dem sie verwendet wird.

12. Reifen (10) nach Anspruch 10, wobei der Draht (14) zu einer Feder gewickelter Stahldraht ist.

13. Reifen (10) nach Anspruch 10, wobei der Draht (14) Multifilamentdraht ist.

14. Reifen (10) nach Anspruch 10, wobei der Draht (14) in dem isolierenden Gummi (14) eingeschlossen ist.

15. Reifen (10) nach Anspruch 10, wobei ein Streifen aus isolierendem Gummi (20), der die Antenne enthält, 1 bis 6 Zoll (2,54 bis 15,2 cm) breit ist.

16. Reifen (10) nach Anspruch 15, wobei die Schleifen (14a) der Antenne eine ovale Form aufweisen und die längere Achse (d) einer Schleife senkrecht zur Achse (1) der Reihe von Schleifen steht.

17. Reifen (10) nach Anspruch 10, wobei die Gesamtstärke des Antennendrahts 0,005 Zoll bis 0,04 Zoll (0,13 bis 1 mm) beträgt.

## Revendications

1. Antenne (30) pour la transmission électronique de données concernant un bandage pneumatique ou une roue, l'antenne comprenant un fil métallique continu (14) arrangé sous la forme d'une série de boucles (14a) conçues pour venir se disposer en position circonférentielle dans la zone de couronne d'un bandage pneumatique (10), dans laquelle le fil métallique ne se croise pas avec lui-même et procure un circuit fermé pour une plaquette de circuits imprimés de répondeur (12) conçue pour transmettre lesdites données.

2. Antenne (30) selon la revendication 1, dans laquelle sa longueur est essentiellement égale à la circonférence de la carcasse du bandage pneumatique (10) dans lequel on l'utilise.

3. Antenne (30) selon la revendication 1, dans laquelle ledit fil métallique (14) est un fil métallique rendu hélicoïdal pour former'un ressort.

4. Antenne (30) selon la revendication 1, dans laquelle ledit fil métallique est un fil métallique à multifilament.

5. Antenne (30) selon la revendication 1, qui est enrobée dans du caoutchouc isolant (20).

6. Antenne (30) selon la revendication 5, dans laquelle une bande de caoutchouc isolant contenant ladite antenne possède une largeur de 1 à 6 pouces (de 2,54 à 15,2 cm).

7. Antenne (30) selon la revendication 1, dans laquelle lesdites boucles (14a) sont de forme ovale, le grand axe (d) d'une boucle étant perpendiculaire à l'axe (1) de la série des boucles.

8. Antenne (30) selon la revendication 1, dans laquelle l'épaisseur totale du fil métallique s'élève de 0,005 pouce à 0,04 pouce (de 0,13 à 1 mm).

9. Antenne (30) selon la revendication 1, dans laquelle la plaquette de circuits imprimés de répondeur (12) contient une bobine qui fait correspondre l'impédance de l'antenne à l'impédance d'un répondeur/signal.

10. Bandage pneumatique (10) comprenant au moins une paire de talons annulaires parallèles (15), au moins une nappe de carcasse (17) entourant lesdits talons, une bande de roulement (19) disposée par-dessus lesdites nappes de carcasse dans la zone de couronne dudit bandage pneumatique, et des flancs (21) disposés entre ladite bande de roulement et lesdits talons, et une antenne de répondeur (30) disposée dans la zone de couronne dudit bandage pneumatique, dans lequel ladite antenne comprend un fil métallique continu (14) arrangé sous la forme d'une série de boucles (14a) conçues pour venir se disposer en position circonférentielle dans la zone de couronne d'un bandage pneumatique (10), dans laquelle le fil métallique ne se croise pas avec lui-même et procure un circuit fermé pour une plaquette de circuits imprimés de répondeur (12) conçue pour transmettre lesdites données.

11. Bandage pneumatique (10) selon la revendication 10, dans lequel la longueur de ladite antenne (30) est essentiellement égale à la circonférence de la carcasse du bandage pneumatique dans lequel on l'utilise.

12. Bandage pneumatique (10) selon la revendication 10, dans lequel ledit fil métallique (14) est un fil métallique rendu hélicoïdal pour former un ressort.

13. Bandage pneumatique (10) selon la revendication 10, dans lequel ledit fil métallique est un fil métallique à multifilament.

14. Bandage pneumatique (10) selon la revendication 10, dans lequel ledit fil métallique (14) est enrobé dans du caoutchouc isolant (20).

15. Bandage pneumatique (10) selon la revendication 10, dans lequel une bande de caoutchouc isolant (20) contenant ladite antenne possède une largeur de 1 à 6 pouces (de 2,54 à 15,2 cm).

16. Bandage pneumatique (10) selon la revendication 10, dans lequel lesdites boucles (14a) sont de forme ovale, le grand axe (d) d'une boucle étant perpendiculaire à l'axe (1) de la série des boucles.

17. Bandage pneumatique (10) selon la revendication 10, dans lequel l'épaisseur totale du fil métallique de l'antenne s'élève de 0,005 pouce à 0,04 pouce (de 0,13 à 1 mm).
